# EUROPÄISCHE PATENTANMELDUNG

(11) **EP 4 023 450 A1**
(43) Veröffentlichungstag der Anmeldung: **06.07.2022**
(21) Anmeldenummer: 20217577.4
(22) Anmeldetag: 29.12.2020
(51) Int. Cl.: B41J 3/407, B41J 29/13, B41J 11/00

(54) **ETIKETTENDRUCKER**

(71) Anmelder: Bizerba SE & Co. KG, 72336 Balingen (DE)
(72) Erfinder: Haigis, Jörg, 72336 Balingen (DE); Eccard, Patrick, 72393 Burladingen (DE)
(74) Vertreter: Manitz Finsterwald Patent- und Rechtsanwaltspartnerschaft mbB

(57) **Zusammenfassung**

Die Erfindung betrifft einen Etikettendrucker (19, 19') zum Bedrucken eines auf eine Rolle gewickelten Papierbandes, mit einem Druckergehäuse (23, 23'), in dem ein Aufnahmeraum (27, 27') für die Rolle mit dem Papierband oder für eine Kassette (39) mit der Rolle vorgesehen ist, wobei das Papierband in einen Papierpfad einlegbar ist, einem an dem Druckergehäuse angebrachten, klappbaren Gehäuseelement (25, 25'), das einen Zugriff auf den Aufnahmeraum zum Einsetzen und Entnehmen der Rolle oder der Kassette in einer geöffneten Stellung freigibt und in einer geschlossenen Stellung verhindert, wobei der Zustand des Etikettendruckers erfassbar ist, nämlich ob das Gehäuseelement geschlossen oder die Kassette eingesetzt ist und ob das Papierband in den Papierpfad eingelegt ist. Es sind eine Reflexionslichtschranke mit einem Lichtsender zur Aussendung eines Sendelichtstrahls und einem Lichtempfänger für einen reflektierten Anteil des Sendelichtstrahls sowie ein weiterer Lichtempfänger für einen transmittierten Anteil des Sendelichtstrahls vorgesehen, wobei die Reflexionslichtschranke an dem Druckergehäuse und der weitere Lichtempfänger an dem Gehäuseelement oder der Kassette vorgesehen ist, oder umgekehrt, und wobei im geschlossenen Zustand des Gehäuseelements die Reflexionslichtschranke und der weitere Lichtempfänger auf zwei einander gegenüberliegenden Seiten des Papierpfads angeordnet sind. Eine Steuereinheit (21) ist dazu ausgebildet, basierend auf einer gemeinsamen Auswertung der Empfangsintensität des Lichtempfängers der Reflexionslichtschranke sowie der Empfangsintensität des weiteren Lichtempfängers den Zustand des Etikettendruckers zu erfassen.

## Beschreibung

Die Erfindung betriff einen Etikettendrucker zum Bedrucken eines auf eine Rolle gewickelten Papierbandes, mit einem Druckergehäuse, in dem ein Aufnahmeraum für die Rolle mit dem Papierband oder für eine Kassette mit der Rolle mit dem Papierband vorgesehen ist, wobei das Papierband in einen Papierpfad einlegbar und entlang des Papierpfads transportierbar ist, einem an dem Druckergehäuse angebrachten, zwischen einer geöffneten Stellung und einer geschlossenen Stellung klappbaren Gehäuseelement, insbesondere einer Gehäusetür, das einen Zugriff auf den Aufnahmeraum zum Einsetzen und Entnehmen der Rolle oder der Kassette in der geöffneten Stellung freigibt und in der geschlossenen Stellung verhindert, und einer Steuereinheit, die dazu ausgebildet ist, den Zustand des Etikettendruckers zu erfassen, nämlich ob das Gehäuseelement geschlossen oder die Kassette eingesetzt ist und ob das Papierband in den Papierpfad eingelegt ist.

Die Steuereinheit benötigt verschiedene Sensoren, um den Status des Etikettendruckers festzustellen. Einerseits muss geprüft werden, ob die Druckertür geschlossen ist bzw. ob die Kassette in den Drucker eingelegt ist. Nur in diesem Fall ist der Drucker einsatzfähig. Mit geöffneter Druckertür oder nicht oder nicht vollständig eingelegter Kassette befindet sich der Drucker nicht in einem funktionalen Zustand. Für die Prüfung ist ein Türsensor vorgesehen. Andererseits muss geprüft werden, ob ein Papierband in den Papierpfad eingelegt ist. Nur dann kann gedruckt werden. Befindet sich kein Papierband im Papierpfad, muss das Papierband korrekt in den Papierpfad eingelegt werden. Hierfür ist ein Papiersensor vorgesehen.

Ein Etikettendrucker mit einem Türsensor und einem Papiersensor ist beispielsweise aus dem Dokument EP 2 103 531 A1 bekannt. Der Türsensor umfasst eine Lichtschranke mit einem Sender und einem Empfänger, die an dem Druckergehäuse vorgesehen ist und die in der geschlossenen Stellung durch einen an der Druckertür vorgesehenen Vorsprung unterbrechbar ist. Der Papiersensor ist üblicherweise als Gabellichtschranke ausgebildet, bei der der Sender und der Empfänger in einer U-Form vorliegen, wobei der Rand des Papierbandes zwischen dem Sender und dem Empfänger hindurchgeführt ist. Eine derartige Sensorik mit zwei Sendern und zwei Empfängern ist jedoch teuer, d.h. mit entsprechend hohen Herstellungskosten verbunden.

Der Erfindung liegt die Aufgabe zugrunde, einen Etikettendrucker der eingangs genannter Art anzugeben, der eine kostengünstigere Möglichkeit bietet, die Erfassung des Zustands des Etikettendruckers vorzunehmen.

Diese Aufgabe wird durch einen Etikettendrucker mit den Merkmalen des Anspruchs 1 gelöst, und insbesondere dadurch, dass eine Reflexionslichtschranke mit einem Lichtsender zum Aussenden eines Sendelichtstrahls und einem Lichtempfänger zum Empfangen eines reflektierten Anteil des Sendelichtstrahls sowie ein weiterer Lichtempfänger zum Empfangen eines transmittierten Anteils des Sendelichtstrahls vorgesehen sind, wobei die Reflexionslichtschranke an dem Druckergehäuse und der weitere Lichtempfänger an dem Gehäuseelement oder der Kassette vorgesehen ist, oder umgekehrt, d.h. die Reflexionslichtschranke an dem Gehäuseelement oder der Kassette und der weitere Lichtempfänger an dem Druckergehäuse vorgesehen ist, und wobei im geschlossenen Zustand des Gehäuseelements die Reflexionslichtschranke und der weitere Lichtempfänger auf zwei einander gegenüberliegenden Seiten des Papierpfads angeordnet sind, und dass die Steuereinheit dazu ausgebildet ist, den Zustand des Etikettendruckers basierend auf einer gemeinsamen Auswertung der Empfangsintensität des Lichtempfängers der Reflexionslichtschranke und der Empfangsintensität des weiteren Lichtempfängers zu erfassen.

Erfindungsgemäß sind lediglich ein Sender und zwei Empfänger erforderlich. Gegenüber aus dem Stand der Technik bekannten Etikettendruckern kann ein Sender eingespart werden. Die spezielle Platzierung und Anordnung der Reflexionslichtschranke und des weiteren Empfängers ermöglicht, dass auf einen zweiten Sender verzichtet werden kann. Mit anderen Worten kann der Sender des Papiersensors auch zur Detektion, ob das Gehäuseelement geschlossen und/oder die Kassette eingesetzt ist, verwendet werden bzw. kann der Sender des Türsensors auch zur Detektion, ob das Papierband in den Papierpfad eingelegt ist, verwendet werden. Letztlich werden gemäß der Erfindung der Türsensor oder der Etikettensensor miteinander kombiniert.

Die gemeinsame Auswertung der beiden Empfangsintensitäten bedeutet, dass sowohl die Empfangsintensität des Lichtempfängers der Reflexionslichtschranke als auch die Empfangsintensität des weiteren Lichtempfängers ausgewertet werden müssen, um den Zustand des Etikettendruckers zu erfassen. Die Auswertung lediglich der Empfangsintensität des Lichtempfängers der Reflexionslichtschranke oder lediglich der Empfangsintensität des weiteren Lichtempfängers ist hierzu nicht ausreichend.

Wie bereits erwähnt kann die Rolle mit dem Papierband auch in einer Kassette, die auch als Bandkassette bezeichnet wird, enthalten sein, wobei die Kassette in dem Aufnahmeraum aufnehmbar ist. Bei dem Aufnahmeraum handelt es sich dann um ein Kassettenfach. Bei Verwendung einer Kassette kann anstelle der Prüfung, ob die Druckertür geschlossen ist, geprüft werden, ob die Kassette eingesetzt ist. Die Prüfung, ob die Kassette eingesetzt ist, schließt die Prüfung, ob die Druckertür geöffnet ist, nicht aus, und umgekehrt.

Das Erfassen des Zustands, dass das Papierband nicht in den Papierpfad eingelegt ist, kann bedeuten, dass nach dem Einlegen der Rolle oder der Kassette in den Aufnahmeraum, insbesondere einem Wechsel der Rolle oder der Kassette, das Papierband von dem Bediener noch nicht in den Papierpfad eingelegt wurde, oder dass das Papierende erreicht ist.

Bei dem Lichtsender kann es sich beispielsweise um eine Laserdiode handeln, die insbesondere eine Wellenlänge im sichtbaren roten Lichtbereich oder Infrarotlichtbereich besitzt. Bei den beiden Empfängern kann es sich beispielsweise um eine Fotodiode oder einen Fototransistor handeln. Der Sendelichtstrahl kann moduliert sein, um die Empfindlichkeit der beiden Lichtempfänger gegenüber Fremdlicht, insbesondere Umgebungslicht, zu reduzieren. Aus diesem Grund kann vor den beiden Lichtempfängern auch jeweils ein Filter angeordnet sein, mit dem beispielsweise Fremdlicht im sichtbaren Bereich herausgefiltert werden kann.

Grundsätzlich ist es auch möglich, dass der weitere Lichtempfänger Teil einer weiteren Reflexionslichtschranke mit einem weiteren Lichtsender ist, wobei vorgesehen ist, dass der weitere Lichtsender inaktiv ist bzw. nicht verwendet wird. Gegenüber dem Stand der Technik ergibt sich dabei weiterhin der Vorteil geringerer Kosten, da der weitere Lichtsender nicht verschaltet, nicht betrieben und nicht gewartet werden muss.

Der Etikettendrucker umfasst einen Druckkopf und ein Gegenelement hierzu, insbesondere eine Druckwalze, wobei der Papierpfad derart vorgegeben ist, dass das Papierband zwischen dem Druckkopf und dem Gegenelement hindurchführbar ist. Die Reflexionslichtschranke und der weitere Lichtempfänger sind in Transportrichtung des Papierbandes gesehen dem Druckkopf und dem Gegenelement, insbesondere in einem Abstand von nicht mehr als 10 cm, insbesondere nicht mehr als 5 cm, vorgeschaltet.

Insbesondere ist die Steuereinheit dazu ausgebildet, zu erfassen, dass das Gehäuseelement geöffnet oder die Kassette nicht eingesetzt ist, wenn die Empfangsintensität des Lichtempfängers der Reflexionslichtschranke kleiner ist als ein vorgegebener Reflexions-Referenzwert und die Empfangsintensität des weiteren Lichtempfängers kleiner ist als ein vorgegebener Transmissions-Referenzwert, und dass andernfalls das Gehäuseelement geschlossen oder die Kassette eingesetzt ist. Bei geöffnetem Gehäuseelement empfangen die beiden Lichtempfänger zumindest im Wesentlichen lediglich Umgebungslicht.

Sofern der weitere Lichtempfänger an der Kassette vorgesehen und die Kassette nicht eingesetzt ist und der weitere Lichtempfänger, insbesondere mangels elektrischen Kontaktes, kein Empfangssignal an die Steuereinheit liefern kann, entspricht dies einem an die Steuereinheit angebundenen weiteren Lichtempfänger, der kein Licht sieht, d.h. eine Empfangsintensität aufweist, die kleiner ist als der vorgegebene Transmissions-Referenzwert, so dass auch in diesem Fall korrekt erfasst werden kann, dass die Kassette nicht eingesetzt ist. Dies gilt entsprechend für den Lichtempfänger der Reflexionslichtschranke, wenn die Reflexionslichtschranke an der Kassette vorgesehen ist, und insbesondere auch, wenn der Lichtsender der Reflexionslichtschranke mangels elektrischen Kontaktes keinen Sendelichtstrahl aussendet.

Darüber hinaus kann vorgesehen sein, dass - sofern erfasst wurde, dass das Gehäuseelement geschlossen oder die Kassette eingesetzt ist - die Steuereinheit dazu ausgebildet ist, anschließend zu erfassen, ob das Papierband in den Papierpfad eingelegt ist. Die Prüfung, ob das Papierband in den Papierpfad eingelegt ist, kann also der Prüfung, ob das Gehäuseelement geschlossen oder die Kassette eingesetzt ist, zeitlich nachgeordnet sein, und wird insbesondere nur in dem Fall vorgenommen, dass zuvor erfasst wurde, dass das Gehäuseelement geschlossen oder die Kassette eingesetzt ist.

Vorzugsweise ist die Steuereinheit dazu ausgebildet, zu erfassen, dass das Papierband nicht in den Papierpfad eingelegt ist, wenn die Empfangsintensität des Lichtempfängers der Reflexionslichtschranke kleiner ist als ein vorgegebener Reflexions-Schwellwert oder die Empfangsintensität des weiteren Lichtempfängers größer ist als ein vorgegebener Transmissions-Schwellwert, und dass andernfalls das Papierband in den Papierpfad eingelegt ist. Wenn kein Papierband eingelegt ist, wird lediglich wenig Licht reflektiert, und zwar von dem weiteren Lichtempfänger, der viel Licht von dem Lichtsender empfängt.

Vorzugsweise ist dabei vorgesehen, dass der vorgegebene Reflexions-Schwellwert kleiner ist als der vorgenannte vorgegebene Reflexions-Referenzwert und/oder dass der vorgegebene Transmissions-Schwellwert größer ist als der vorgenannte vorgegebene Transmissions-Referenzwert. Mit diesem Werten kann die Erfassung des Zustands des Etikettendruckers mit besonders hoher Zuverlässigkeit vorgenommen werden.

Gemäß einer bevorzugten Ausführungsform ist die Steuereinheit dazu ausgebildet, basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander zu unterscheiden. Der Betrieb des Etikettendruckes kann dann an den jeweils erfassten Papierbandtyp angepasst werden. Bei einem Papierbandtyp kann es sich insbesondere um ein Etikettenband oder ein Endlosband handeln. Unter einem Etikettenband sind beispielsweise ein Trägerband mit darauf aufgebrachten selbstklebenden Etiketten, ein selbstklebendes Linerlessband mit Blackmarks sowie ein Trägerband mit darauf aufgebrachten selbstklebenden Etiketten und Blackmarks zu verstehen. Unter einem Endlosband sind beispielsweise ein selbstklebendes Linerlessband ohne Blackmarks und ein nicht-selbstklebendes Bonpapier zu verstehen.

Konkret kann die Steuereinheit dazu ausgebildet sein, bei in den Papierpfad eingelegtem und entlang des Papierpfads transportiertem Papierband basierend auf einem zeitlichen Verlauf der Empfangsintensität des weiteren Lichtempfängers, insbesondere über eine vorgegebene Zeitdauer, zu erfassen, ob es sich bei dem Papierband um ein Papierband eines ersten Typs, dessen Lichtdurchlässigkeit in Bandrichtung gemäß einem sich wiederholenden Muster variiert, insbesondere ein Etikettenband, wie es vorstehend erläutert ist, oder um ein Papierband eines zweiten Typs, dessen Lichtdurchlässigkeit in Bandrichtung konstant ist, insbesondere ein Endlosband, wie es vorstehend erläutert ist, handelt. Die vorgegebene Zeitdauer kann sich insbesondere aus einem vorgegebenen Zeitwert oder einer Verrechnung eines vorgegebenen Wegs, um den das Papierband transportiert wird, mit der Transportgeschwindigkeit des Papierbandes ergibt.

Dabei ist es bevorzugt, wenn die Steuereinheit dazu ausgebildet ist, zu erfassen, dass es sich bei dem Papierband um ein Papierband des ersten Typs handelt, wenn der zeitliche Verlauf der Empfangsintensität des weiteren Lichtempfängers von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt. Durch den Wechsel der Empfangsintensität des weiteren Lichtempfängers von dem ersten Wert auf den zweiten Wert kann eine Etikettenlücke erkannt werden. Bleibt der Wert der Empfangsintensität des weiteren Lichtempfängers jedoch innerhalb einer Schwankungsbreite konstant, liegt keine Etikettenlücke vor.

Es kann vorgesehen sein, dass die Reflexionslichtschranke und der weitere Lichtempfänger mittig zu dem Papierpfad angeordnet sind. Damit kann der Etikettendrucker derart betrieben werden, dass das verwendete Papierband immer mittig zu dem Papierpfad ausgerichtet ist und nicht am Rand des Papierpfads anschlagen muss, wie es bei den aus dem Stand der Technik bekannten Gabellichtschranken erforderlich ist. Dies kann insbesondere dann einen Vorteil verschaffen, wenn schmale Papierbänder verwendet werden.

Ferner kann einen Kabelverbindung vorgesehen sein, über die der an dem Gehäuseelement vorgesehene weitere Lichtempfänger oder die an dem Gehäuseelement vorgesehene Reflexionslichtschranke elektrisch an das Druckergehäuse angeschlossen ist. Alternativ oder zusätzlich können elektrische Kontaktierungselemente, z.B. Federkontaktstifte, vorgesehen sein, die einen elektrischen Kontakt zwischen dem Druckergehäuse und dem an der Kassette vorgesehenen weiteren Lichtempfänger oder der an der Kassette vorgesehenen Reflexionslichtschranke herstellen, wenn die Kassette in den Aufnahmeraum eingesetzt ist.

Die Erfindung betrifft ferner eine Waage, insbesondere Ladenwaage, mit einem Etikettendrucker, wie er vorstehend beschrieben ist.

Die Erfindung betrifft weiterhin ein Verfahren zum Betrieb eines Etikettendruckers zum Bedrucken eines auf eine Rolle gewickelten Papierbandes, der Etikettendrucker umfassend ein Druckergehäuse, in dem ein Aufnahmeraum für die Rolle mit dem Papierband oder für eine Kassette mit der Rolle mit dem Papierband vorgesehen ist, wobei das Papierband in einen Papierpfad einlegbar und entlang des Papierpfad transportierbar ist, und ein an dem Druckergehäuse angebrachtes, zwischen einer geöffneten Stellung und einer geschlossenen Stellung klappbares Gehäuseelement, das einen Zugriff auf den Aufnahmeraum zum Einsetzen und Entnehmen der Rolle oder der Kassette in der geöffneten Stellung freigibt und in der geschlossenen Stellung verhindert, wobei bei dem Verfahren mittels einer Steuereinheit der Zustand des Etikettendruckers erfasst wird, nämlich ob das Gehäuseelement geschlossen oder die Kassette eingesetzt ist und ob das Papierband in den Papierpfad eingelegt ist. Das Verfahren zeichnet sich dadurch aus, dass eine Reflexionslichtschranke mit einem Lichtsender und einem Lichtempfänger sowie ein weiterer Lichtempfänger vorgesehen sind, wobei die Reflexionslichtschranke an dem Druckergehäuse und der weitere Lichtempfänger an dem Gehäuseelement oder der Kassette vorgesehen ist, oder umgekehrt, und wobei im geschlossenen Zustand des Gehäuseelements die Reflexionslichtschranke und der weitere Lichtempfänger auf zwei einander gegenüberliegenden Seiten des Papierpfads angeordnet sind, wobei von dem Lichtsender ein Sendelichtstrahl ausgesandt wird, von dem Lichtempfänger der Reflexionslichtschranke ein reflektierter Anteil des Sendelichtstrahls empfangen wird und von dem weiteren Lichtempfänger ein transmittierter Anteil des Sendelichtstrahls empfangen wird, und wobei mittels der Steuereinheit die Empfangsintensität des Lichtempfängers der Reflexionslichtschranke und die Empfangsintensität des weiteren Lichtempfängers gemeinsam ausgewertet werden und basierend auf der gemeinsamen Auswertung der Zustand des Etikettendruckers erfasst wird.

Vorteilhafte Ausführungsformen des erfindungsgemäßen Verfahrens ergeben sich analog zu den vorstehend beschriebenen vorteilhaften Ausführungsformen des erfindungsgemäßen Etikettendruckers.

Weitere vorteilhafte Ausgestaltungen der Erfindung sind in den Unteransprüchen, der Figurenbeschreibung und der Zeichnung beschrieben.

Nicht beschränkende Ausführungsbeispiele der Erfindung sind in der Zeichnung dargestellt und werden nachfolgend beschrieben.

Es zeigen, jeweils in schematischer Darstellung,
- Fig. 1: eine Waage, insbesondere Ladenwaage, mit einem Etikettendrucker gemäß einer ersten Ausführungsform der Erfindung,
- Fig. 2A, B: den Etikettendrucker aus Fig. 1 in Einzeldarstellung von vorne mit einer Druckertür und in einer Darstellung, in der die Druckertür weggelassen ist,
- Fig. 3: die Druckertür aus Fig. 2A im aufgeklappten Zustand,
- Fig. 4: ein Flussdiagramm zur Erkennung des Zustands des Etikettendruckers aus Fig. 1,
- Fig. 5: ein Flussdiagramm zur Erkennung des eingelegten Papierbandtyps,
- Fig. 6: eine Waage, insbesondere Ladenwaage, mit einem Etikettendrucker gemäß einer zweiten Ausführungsform der Erfindung,
- Fig. 7: den Etikettendrucker aus Fig. 6 mit einem Kassettenfach, einer teilweise eingesetzten Bandkassette und teilweise geöffneter Druckertür in einer Draufsicht,
- Fig. 8: den Etikettendrucker aus Fig. 6 in seitlicher Ansicht, wobei die Druckertür weggelassen ist, und
- Fig. 9: die Bankkassette aus Fig. 7 in Einzeldarstellung.

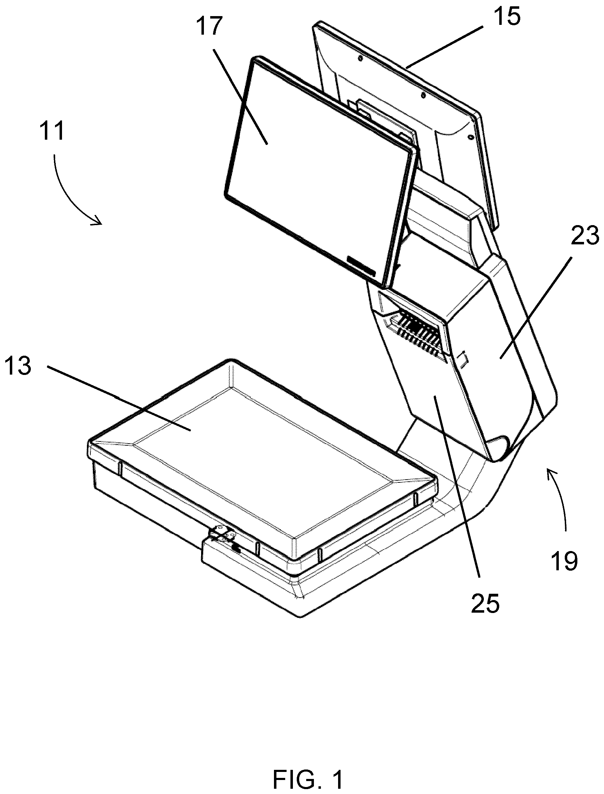

Die in Fig. 1 dargestellte, beispielhafte Ladenwaage 11 umfasst eine Lastplatte 13, welche das Gewicht eines auf ihr liegenden Artikels ermittelt, das sowohl auf einer Anzeige 15 für den Kunden als auch auf einer Anzeige 17 für den Verkäufer angezeigt wird. Die Anzeige 17 ist als Touchscreen ausgebildet, so dass die Ladenwaage 11 hierüber auch bedient werden kann. Über den Touchscreen 17 kann eine dem jeweiligen Artikel zugeordnete Identifikationsnummer (PLU) eingegeben werden, so dass unter Hinzunahme des Gewichts ein Preis für den Artikel berechnet werden kann, welcher dann ebenfalls auf den beiden Anzeigen 15, 17 angezeigt wird. Darüber hinaus umfasst die Ladenwaage einen Etikettendrucker 19, um ein Etikett mit dem Gewicht, dem Namen des Artikels und dem berechneten Preis zu bedrucken.

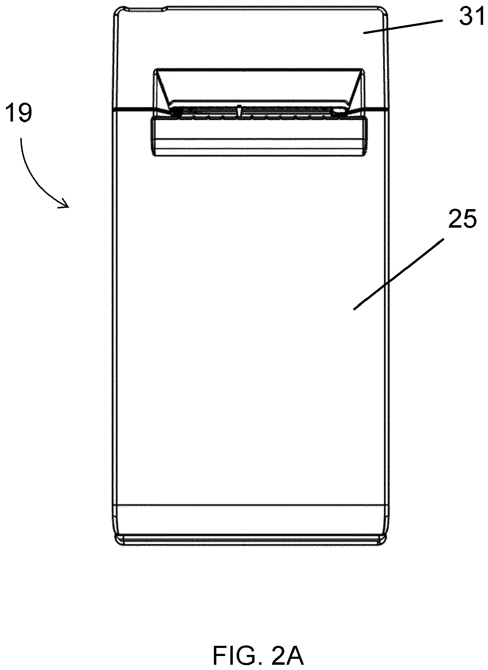

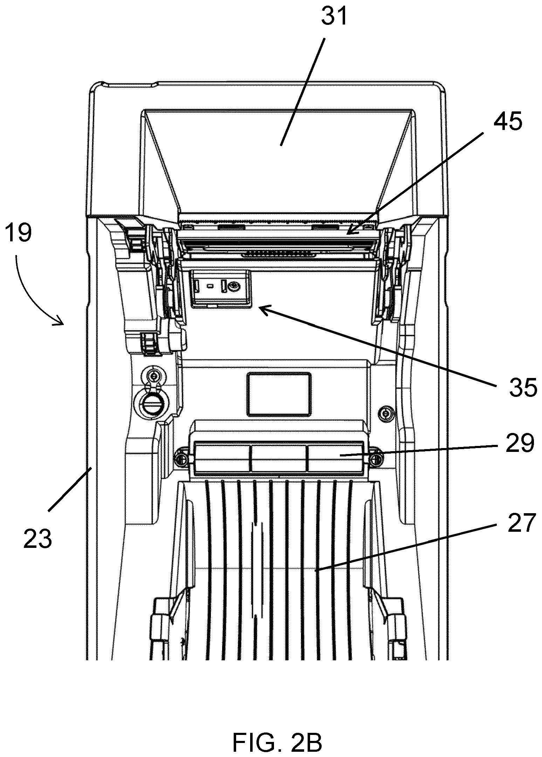

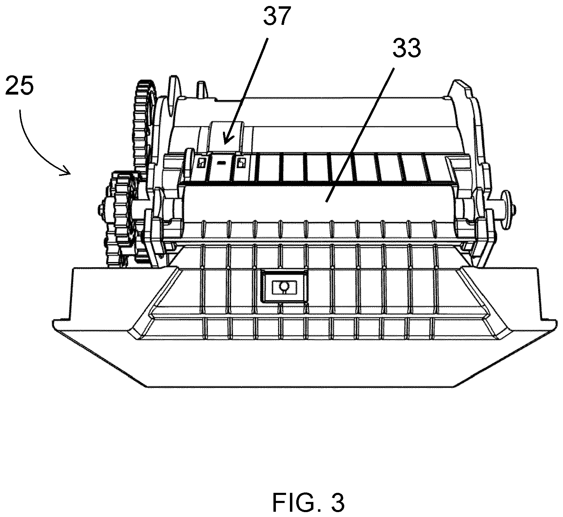

Der Etikettendrucker 19 umfasst ein Druckergehäuse 23 und ein daran gelenkig angebrachtes Gehäuseelement in Form einer Druckertür 25, die zwischen einer geschlossenen Stellung, die in den Fig. 1 und 2A dargestellt ist, und einer geöffneten Stellung, die aus Fig. 3 ersichtlich ist, bewegbar ist. In Fig. 2B ist die Druckertür 25 weggelassen, so dass das Innere des Etikettendruckers 19 einsehbar ist. Im Inneren des Etikettendruckers 19 ist ein Aufnahmeraum 27 sichtbar. Bei geöffneter Druckertür 25 kann eine Rolle mit Papierband, auf das gedruckt wird, in den Aufnahmeraum 27 eingesetzt bzw. kann eine verbrauchte Papierbandrolle aus dem Aufnahmeraum 27 entnommen werden. Nach dem Einsetzen der Rolle wird der Anfang des Papierbandes abgewickelt und in den Papierpfad des Etikettendruckers 19 eingelegt. Das Papierband kann dann über eine angetriebene Druckwalze 33, die an der Innenseite der Druckertür 25 angebracht ist, wie aus Fig. 3 ersichtlich ist, entlang des Papierpfads transportiert werden. Darüber hinaus sind eine Umlenkrolle 29 für das Papierband und ein Druckkopf 45 sichtbar.

Der Etikettendrucker 19 kann mit einem selbstklebenden Linerlessband oder mit einem nicht-selbstklebenden Bonpapier betrieben werden. Deshalb weist der Etikettendrucker 19 einen grundsätzlich bekannten Abschneider auf, der in Fig. 2B jedoch durch ein frontseitiges Abdeckelement 31 verdeckt ist und mit dem einzelne Etiketten von dem Linerlessband bzw. dem Bonpapier abgetrennt werden können. Der Etikettendrucker 19 kann aber auch mit einem Trägerband mit darauf aufgebrachten selbstklebenden Etiketten betrieben werden.

Die nicht sichtbare druckergehäuseseitig angeordnete Steuereinheit ist dazu ausgebildet, den Zustand des Etikettendruckers 19 zu erfassen, nämlich ob die Druckertür 25 geschlossen ist und ob das Papierband in den Papierpfad eingelegt ist. Hierzu umfasst der Etikettendrucker 19 eine druckergehäuseseitig vorgesehene Reflexionslichtschranke 35 (vgl. Fig. 2B) mit einem Lichtsender und einem Lichtempfänger sowie einen druckertürseitig vorgesehenen weiteren Lichtempfänger 37 (vgl. Fig. 3), der über eine Kabelverbindung an die Steuereinheit angeschlossen ist. Die Anordnung kann jedoch auch umgekehrt vorgenommen werden. Die Anordnung ist in beiden Fällen derart, dass, wenn die Druckertür 25 geschlossen ist, die Reflexionslichtschranke 35 und der weitere Lichtempfänger 37 auf zwei einander gegenüberliegenden Seiten des Papierpfads angeordnet sind. Im Betrieb sendet der Lichtsender der Reflexionslichtschranke 35 einen Sendelichtstrahl aus, wobei ein reflektierter Anteil des Sendelichtstrahls durch den Lichtempfänger der Reflexionslichtschranke 35 und ein transmittierter Anteil des Sendelichtstrahls durch den weiteren Lichtempfänger 37 empfangen werden. Die Steuereinheit ist dann dazu ausgebildet, den vorgenannten Zustand des Etikettendruckers 19 basierend auf einer gemeinsamen Auswertung der beiden Empfangsintensitäten des Lichtempfängers der Reflexionslichtschranke 35 und des weiteren Lichtempfängers 37 zu erfassen.

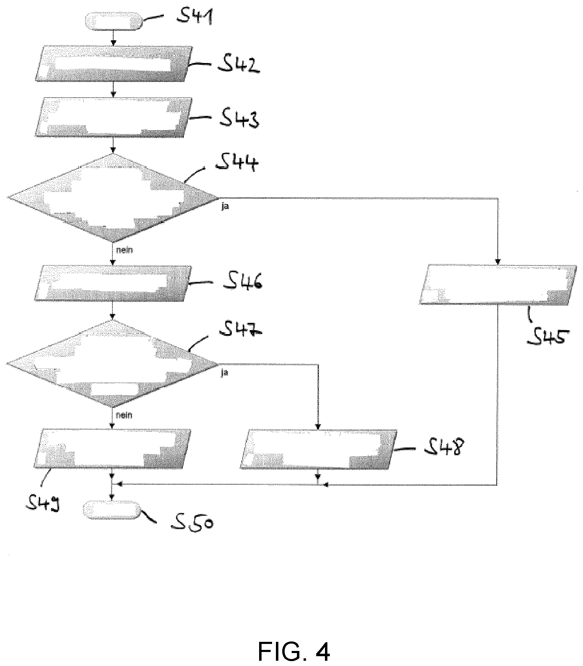

Die Verfahrensschritte, die zur Erkennung des Zustands des Etikettendruckers 19 durchgeführt werden, sind in Fig. 4 dargestellt. In Schritt S41 startet das Verfahren. In Schritt S42 sendet der Lichtsender der Reflexionslichtschranke 35 einen Sendelichtstrahl aus. In Schritt S43 wird von dem Lichtempfänger der Reflexionslichtschranke 35 ein reflektierter Anteil des Sendelichtstrahls detektiert und von dem weiteren Lichtempfänger 37 wird ein transmittierter Anteil des Sendelichtstrahls detektiert. In Schritt S44 wird geprüft, ob die Druckertür 25 offen ist. Hierzu wird geprüft, ob die Empfangssignalintensität des Lichtempfängers der Reflexionslichtschranke 35 kleiner ist als ein vorgegebener Reflexions-Referenzwert, beispielsweise 1.000, und die Empfangsintensität des weiteren Lichtempfängers 37 kleiner ist als ein vorgegebener Transmissions-Referenzwert, beispielsweise 250. Ist dies der Fall, wird gemäß Schritt S45 festgestellt, dass die Druckertür 25 offen ist. Der Etikettendrucker 19 ist nicht druckbereit. Das Verfahren zur Erkennung des Zustands des Etikettendruckers 19 wird gemäß Schritt S50 beendet. Ist dies nicht der Fall, wird gemäß Schritt S46 festgestellt, dass die Druckertür 25 geschlossen ist. In Schritt S47 wird geprüft, ob das Papierband nicht in den Papierpfad eingelegt ist. Hierzu wird geprüft, ob die Empfangsintensität des Lichtempfängers der Reflexionslichtschranke 35 kleiner ist als ein vorgegebener Reflexions-Schwellwert, beispielsweise 900, oder die Empfangsintensität des weiteren Lichtempfängers 37 größer ist als ein vorgegebener Transmissions-Schwellwert, beispielsweise 3.000. Ist dies der Fall, wird gemäß Schritt S48 festgestellt, dass das Papierband nicht in den Papierpfad eingelegt ist. Der Etikettendrucker 19 ist nicht druckbereit. Das Verfahren zur Erkennung des Zustands des Etikettendruckers 19 wird gemäß Schritt S50 beendet. Ist dies nicht der Fall, wird gemäß Schritt S49 festgestellt, dass das Papierband in den Papierpfad eingelegt ist. Der Etikettendrucker 19 ist druckbereit. Das Verfahren zur Erkennung des Zustands des Etikettendruckers 19 wird gemäß Schritt S50 beendet.

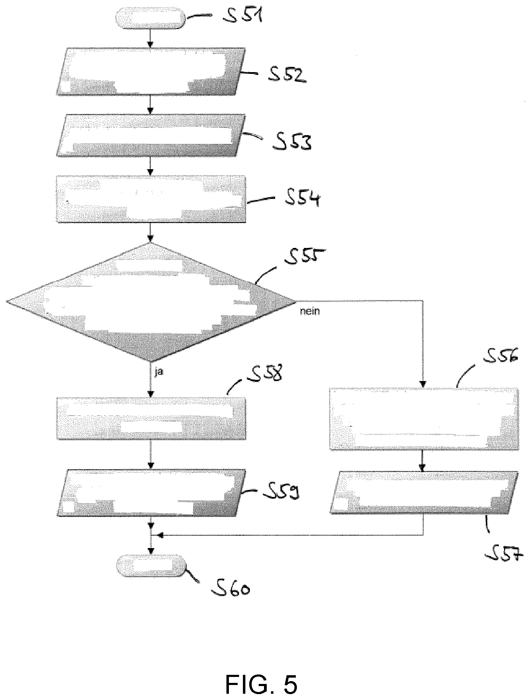

Darüber hinaus kann erfasst werden, welcher Papierbandtyp in dem Etikettendrucker 19 verwendet wird, d.h. ob ein Etikettenband (bei dem die Etikettenlänge der vereinzelten Etiketten vorgegeben ist) oder ein Endlosband (bei dem die Etikettenlänge der vereinzelten Etiketten nicht vorgegeben ist) verwendet wird. Die Verfahrensschritte, die zur Erkennung des verwendeten Papierbandtyps durchgeführt werden, sind in Fig. 5 dargestellt. In Schritt S51 startet das Verfahren. In Schritt S52 wird eine in dem Etikettendrucker 19 hinterlegte maximale Etikettenlänge, beispielsweise 20 cm, eingelesen. In Schritt S53 sendet der Lichtsender der Reflexionslichtschranke 35 einen Sendelichtstrahl aus und das Papierband wird entlang des Papierpfads transportiert. In Schritt S54 wird über die Zeitdauer, bis das Papierband um die hinterlegte Etikettenlänge transportiert wurde, von dem Lichtempfänger der Reflexionslichtschranke 35 ein reflektierter Anteil des Sendelichtstrahls detektiert und von dem weiteren Lichtempfänger 37 ein transmittierter Anteil des Sendelichtstrahls detektiert. In Schritt S55 wird geprüft, ob innerhalb der Zeitdauer die Empfangsintensität des weiteren Lichtempfängers 37 von einem ersten Wert, beispielsweise 1.400 (z.B. Trägerpapier und Etikett), auf einen zweiten Wert, beispielsweise 2.500 (z.B. nur Trägerpapier), der sich von dem ersten Wert um wenigstens eine vorgegebene Referenzdifferenz unterscheidet, wechselt. Ist dies nicht der Fall, wird gemäß Schritt S56 keine Etikettenlücke erkannt. Gemäß Schritt S57 wird festgestellt, dass ein Endlosband verwendet wird. Das Verfahren zur Erkennung des verwendeten Papierbandtyps wird gemäß Schritt S60 beendet. Ist dies der Fall, wird gemäß Schritt S58 eine Etikettenlücke erkannt. Gemäß Schritt S59 wird festgestellt, dass ein Etikettenband verwendet wird. Das Verfahren zur Erkennung des Papierbandtyps wird gemäß Schritt S60 beendet.

Die im Zusammenhang mit den Figuren 4 und 5 genannten Werte sind mit Ausnahme der genannten Etikettenlänge als dimensionslose Größen angegeben, da es für die Verfahrensschritte S41 bis S60 lediglich auf das Verhältnis dieser Werte ankommt.

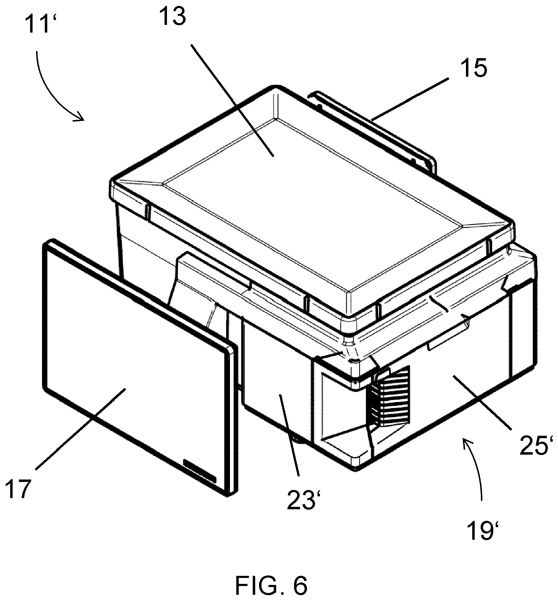

In Fig. 6 ist eine weitere Ladenwaage 11' mit einem weiteren Etikettendrucker 19' dargestellt. Im Gegensatz zu der Ladenwaage gemäß Fig. 1 ist der Etikettendrucker 19' nicht an einem Stativ angeordnet, sondern befindet sich unterhalb der Lastplatte 13. Darüber hinaus sind die Kundenanzeige 15 und der Bediener-Touchscreen 17 im Bereich der Lastplatte 13 angeordnet.

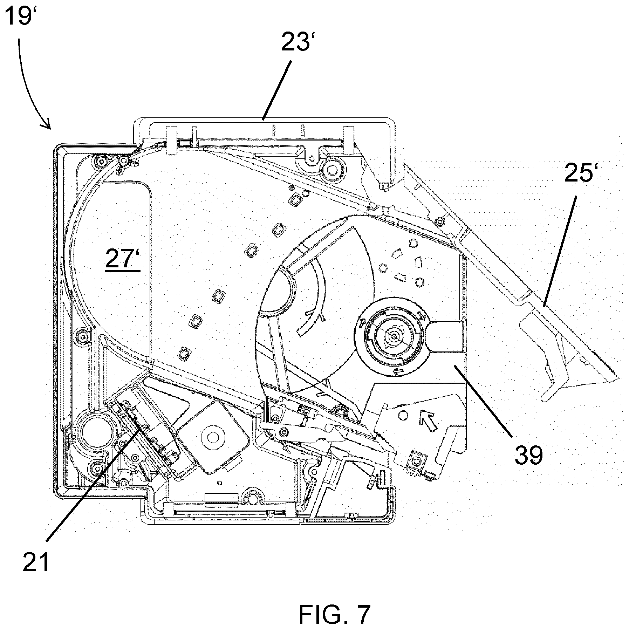

Der Etikettendrucker 19' umfasst gemäß Fig. 7 ebenfalls ein Druckergehäuse 23', in dem ein Aufnahmeraum 27' in Form eines Kassettenfachs ausgebildet ist, in das eine Bandkassette 39 mit einer Rolle mit dem Papierband einsetzbar ist. Darüber hinaus ist auch ein an dem Druckergehäuse 23' um eine Drehachse klappbar angebrachtes Gehäuseelement in Form einer Druckertür 25' vorgesehen, die zwischen einer Offen-Stellung und einer Geschlossen-Stellung verstellbar ist. In der Offen-Stellung der Druckertür 25' ist der Zugang zu dem Aufnahmeraum 27' frei, d.h. die Bandkassette 39 kann in den Aufnahmeraum 27' eingesetzt oder aus dem Aufnahmeraum 27' entnommen werden. In der Geschlossen-Stellung der Druckertür 25' hingegen ist dies nicht der Fall, da der Zugang dann verschlossen ist.

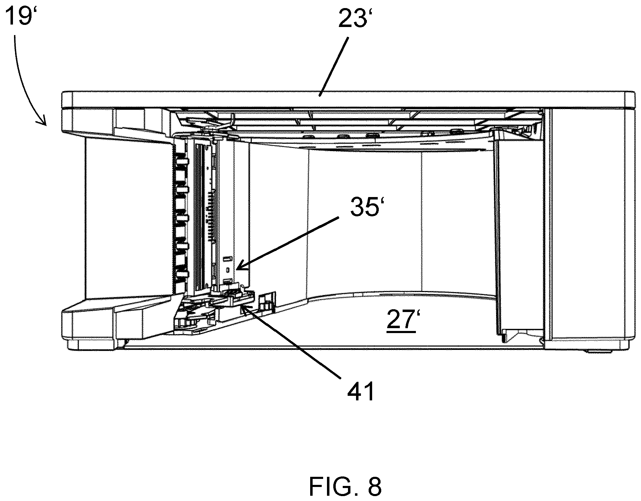

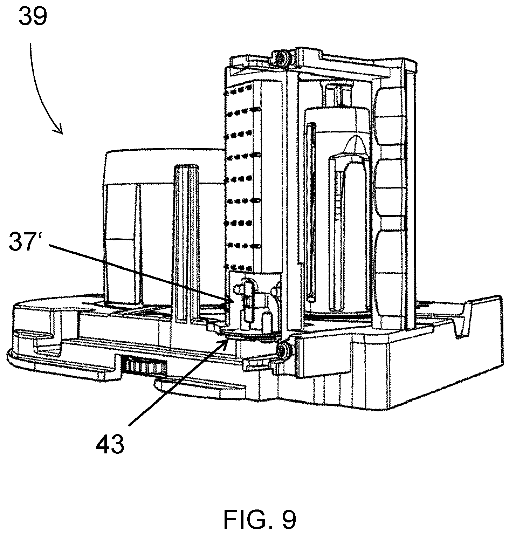

Darüber hinaus ist eine Steuereinheit 21 vorgesehen, die analog zu der Steuereinheit des Etikettendruckers 19 den Zustand des Etikettendruckers 19' erfassen kann, wobei bei dem Etikettendrucker 19' jedoch nicht darauf abgestellt wird, ob die Druckertür 25' geschlossen ist, sondern darauf, ob die Bandkassette 39 in den Aufnahmeraum 27' eingesetzt ist. Hierzu umfasst der Etikettendrucker 19' ebenfalls eine druckergehäuseseitig vorgesehene Reflexionslichtschranke 35' (vgl. Fig. 8) mit einem Lichtsender und einem Lichtempfänger sowie einen druckertürseitig vorgesehenen weiteren Lichtempfänger 37' (vgl. Fig. 9), der über elektrische Kontaktierungselemente 41, z.B. Federkontaktstifte, und entsprechende Kontaktflächen 43 an die Steuereinheit 21 angeschlossen wird. Die Anordnung kann auch hier umgekehrt vorgenommen werden, und die Anordnung ist auch hier in beiden Fällen derart, dass, wenn die Bandkassette 39 eingesetzt ist, die Reflexionslichtschranke 35' und der weitere Lichtempfänger 37' auf zwei einander gegenüberliegenden Seiten eines Papierpfads des Etikettendruckers 19' angeordnet sind.

### Bezugszeichenliste

- 11, 11': Ladenwaage
- 13: Lastplatte
- 15: Kundenanzeige
- 17: Bediener-Touchscreen
- 19, 19': Etikettendrucker
- 21: Steuereinheit
- 23, 23': Druckergehäuse
- 25, 25': Druckertür
- 27, 27': Aufnahmeraum
- 29: Umlenkrolle
- 31: Abdeckelement
- 33: Druckwalze
- 35, 35': Reflexionslichtschranke
- 37, 37': weiterer Lichtempfänger
- 39: Bandkassette
- 41: elektrische Kontaktierungselemente
- 43: Kontaktflächen
- 45: Druckkopf

- S41-S60: Verfahrensschritt

## Patentansprüche

1. Etikettendrucker zum Bedrucken eines auf eine Rolle gewickelten Papierbandes, mit
einem Druckergehäuse (23, 23'), in dem ein Aufnahmeraum (27, 27') für die Rolle mit dem Papierband oder für eine Kassette (39) mit der Rolle mit dem Papierband vorgesehen ist, wobei das Papierband in einen Papierpfad einlegbar und entlang des Papierpfads transportierbar ist,
einem an dem Druckergehäuse (23, 23') angebrachten, zwischen einer geöffneten Stellung und einer geschlossenen Stellung klappbaren Gehäuseelement (25, 25'), das einen Zugriff auf den Aufnahmeraum (27, 27') zum Einsetzen und Entnehmen der Rolle oder der Kassette (39) in der geöffneten Stellung freigibt und in der geschlossenen Stellung verhindert, und
einer Steuereinheit (21), die dazu ausgebildet ist, den Zustand des Etikettendruckers (19, 19') zu erfassen, nämlich ob das Gehäuseelement (25, 25') geschlossen oder die Kassette (39) eingesetzt ist und ob das Papierband in den Papierpfad eingelegt ist,
**dadurch gekennzeichnet,**
**dass** eine Reflexionslichtschranke (35, 35') mit einem Lichtsender zum Aussenden eines Sendelichtstrahls und einem Lichtempfänger zum Empfangen eines reflektierten Anteil des Sendelichtstrahls sowie ein weiterer Lichtempfänger (37, 37') zum Empfangen eines transmittierten Anteils des Sendelichtstrahls vorgesehen sind, wobei die Reflexionslichtschranke (35, 35') an dem Druckergehäuse (23, 23') und der weitere Lichtempfänger (37, 37') an dem Gehäuseelement (25, 25') oder der Kassette (39) vorgesehen ist, oder umgekehrt, und wobei im geschlossenen Zustand des Gehäuseelements (25, 25') die Reflexionslichtschranke (35, 35') und der weitere Lichtempfänger (37, 37') auf zwei einander gegenüberliegenden Seiten des Papierpfads angeordnet sind, und
**dass** die Steuereinheit (21) dazu ausgebildet ist, den Zustand des Etikettendruckers (19, 19') basierend auf einer gemeinsamen Auswertung der Empfangsintensität des Lichtempfängers der Reflexionslichtschranke (35, 35') und der Empfangsintensität des weiteren Lichtempfängers (37, 37') zu erfassen.

2. Etikettendrucker nach Anspruch 1,
**dadurch gekennzeichnet,**
**dass** die Steuereinheit (21) dazu ausgebildet ist, zu erfassen, dass das Gehäuseelement (25, 25') geöffnet oder die Kassette (39) nicht eingesetzt ist, wenn die Empfangsintensität des Lichtempfängers der Reflexionslichtschranke (35, 35') kleiner ist als ein vorgegebener Reflexions-Referenzwert und die Empfangsintensität des weiteren Lichtempfängers (37, 37') kleiner ist als ein vorgegebener Transmissions-Referenzwert, und dass andernfalls das Gehäuseelement (25, 25') geschlossen oder die Kassette (39) eingesetzt ist.

3. Etikettendrucker nach Anspruch 2,
**dadurch gekennzeichnet,**
**dass** - sofern erfasst wurde, dass das Gehäuseelement (25, 25') geschlossen oder die Kassette (39) eingesetzt ist - die Steuereinheit (21) dazu ausgebildet ist, anschließend zu erfassen, ob das Papierband in den Papierpfad eingelegt ist.

4. Etikettendrucker nach einem der vorstehenden Ansprüche,
**dadurch gekennzeichnet,**
**dass** die Steuereinheit (21) dazu ausgebildet ist, zu erfassen, dass das Papierband nicht in den Papierpfad eingelegt ist, wenn die Empfangsintensität des Lichtempfängers der Reflexionslichtschranke (35, 35') kleiner ist als ein vorgegebener Reflexions-Schwellwert oder die Empfangsintensität des weiteren Lichtempfängers (37, 37') größer ist als ein vorgegebener Transmissions-Schwellwert, und dass andernfalls das Papierband in den Papierpfad eingelegt ist.

5. Etikettendrucker nach Anspruch 4 und Anspruch 2 oder 3,
**dadurch gekennzeichnet,**
**dass** der vorgegebene Reflexions-Schwellwert kleiner ist als der vorgegebene Reflexions-Referenzwert und/oder dass der vorgegebene Transmissions-Schwellwert größer ist als der vorgegebene Transmissions-Referenzwert.

6. Etikettendrucker nach einem der vorstehenden Ansprüche,
**dadurch gekennzeichnet,**
**dass** die Steuereinheit (21) dazu ausgebildet ist, basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander zu unterscheiden.

7. Etikettendrucker nach einem der vorstehenden Ansprüche,
**dadurch gekennzeichnet,**
**dass** die Steuereinheit (21) dazu ausgebildet ist, bei in den Papierpfad eingelegtem und entlang des Papierpfads transportiertem Papierband basierend auf einem zeitlichen Verlauf der Empfangsintensität des weiteren Lichtempfängers (37, 37'), insbesondere über eine vorgegebene Zeitdauer, zu erfassen, ob es sich bei dem Papierband um ein Papierband eines ersten Typs, dessen Lichtdurchlässigkeit in Bandrichtung gemäß einem sich wiederholenden Muster variiert, insbesondere ein Etikettenband, oder um ein Papierband eines zweiten Typs, dessen Lichtdurchlässigkeit in Bandrichtung konstant ist, insbesondere ein Endlosband, handelt.

8. Etikettendrucker nach Anspruch 7,
**dadurch gekennzeichnet,**
**dass** die Steuereinheit (21) dazu ausgebildet ist, zu erfassen, dass es sich bei dem Papierband um ein Papierband des ersten Typs handelt, wenn der zeitliche Verlauf der Empfangsintensität des weiteren Lichtempfängers (37, 37') von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt.

9. Etikettendrucker nach einem der vorstehenden Ansprüche,
**dadurch gekennzeichnet,**
**dass** die Reflexionslichtschranke (35, 35') und der weitere Lichtempfänger (37, 37') mittig zu dem Papierpfad angeordnet sind.

10. Etikettendrucker nach einem der vorstehenden Ansprüche,
**dadurch gekennzeichnet,**
**dass** eine Kabelverbindung vorgesehen ist, über die der an dem Gehäuseelement (25, 25') vorgesehene weitere Lichtempfänger (37, 37') oder die an dem Gehäuseelement (25, 25') vorgesehene Reflexionslichtschranke (35, 35') elektrisch an das Druckergehäuse (23, 23') angeschlossen ist, und/oder
**dass** elektrische Kontaktierungselemente (41), z.B. Federkontaktstifte, vorgesehen sind, die einen elektrischen Kontakt zwischen dem Druckergehäuse (23, 23') und dem an der Kassette (39) vorgesehenen weiteren Lichtempfänger (37, 37') oder der an der Kassette (39) vorgesehenen Reflexionslichtschranke (35, 35') herstellen, wenn die Kassette (39) in den Aufnahmeraum (27, 27') eingesetzt ist.

11. Waage, insbesondere Ladenwaage, mit einem Etikettendrucker (19, 19') nach einem der vorstehenden Ansprüche.

12. Verfahren zum Betrieb eines Etikettendruckers (19, 19') zum Bedrucken eines auf eine Rolle gewickelten Papierbandes, der Etikettendrucker (19, 19') umfassend
ein Druckergehäuse (23, 23'), in dem ein Aufnahmeraum (27, 27') für die Rolle mit dem Papierband oder für eine Kassette (39) mit der Rolle mit dem Papierband vorgesehen ist, wobei das Papierband in einen Papierpfad einlegbar und entlang des Papierpfads transportierbar ist, und
ein an dem Druckergehäuse (23, 23') angebrachtes, zwischen einer geöffneten Stellung und einer geschlossenen Stellung klappbares Gehäuseelement (25, 25'), das einen Zugriff auf den Aufnahmeraum (27, 27') zum Einsetzen und Entnehmen der Rolle oder der Kassette (39) in der geöffneten Stellung freigibt und in der geschlossenen Stellung verhindert,
wobei bei dem Verfahren mittels einer Steuereinheit (21) der Zustand des Etikettendruckers (19, 19') erfasst wird, nämlich ob das Gehäuseelement (25, 25') geschlossen oder die Kassette (39) eingesetzt ist und ob das Papierband in den Papierpfad eingelegt ist,
**dadurch gekennzeichnet,**
**dass** eine Reflexionslichtschranke (35, 35') mit einem Lichtsender und einem Lichtempfänger sowie ein weiterer Lichtempfänger (37, 37') vorgesehen sind, wobei die Reflexionslichtschranke (35, 35') an dem Druckergehäuse (23, 23') und der weitere Lichtempfänger (37, 37') an dem Gehäuseelement (25, 25') oder der Kassette (39) vorgesehen ist, oder umgekehrt, und wobei im geschlossenen Zustand des Gehäuseelements (25, 25') die Reflexionslichtschranke (35, 35') und der weitere Lichtempfänger (37, 37') auf zwei einander gegenüberliegenden Seiten des Papierpfads angeordnet sind,
wobei von dem Lichtsender ein Sendelichtstrahl ausgesandt wird, von dem Lichtempfänger der Reflexionslichtschranke (35, 35') ein reflektierter Anteil des Sendelichtstrahls empfangen wird und von dem weiteren Lichtempfänger (37, 37') ein transmittierter Anteil des Sendelichtstrahls empfangen wird, und
wobei mittels der Steuereinheit (21) die Empfangsintensität des Lichtempfängers der Reflexionslichtschranke (35, 35') und die Empfangsintensität des weiteren Lichtempfängers (37, 37') gemeinsam ausgewertet werden und basierend auf der gemeinsamen Auswertung der Zustand des Etikettendruckers (19, 19') erfasst wird.

13. Verfahren nach Anspruch 12,
**dadurch gekennzeichnet,**
**dass** mittels der Steuereinheit (21) erfasst wird, dass das Gehäuseelement (25, 25') geöffnet oder die Kassette (39) nicht eingesetzt ist, wenn die Empfangsintensität des Lichtempfängers der Reflexionslichtschranke (35, 35') kleiner ist als ein vorgegebener Reflexions-Referenzwert und die Empfangsintensität des weiteren Lichtempfängers (37, 37') kleiner ist als ein vorgegebener Transmissions-Referenzwert, und dass andernfalls das Gehäuseelement (25, 25') geschlossen oder die Kassette eingesetzt ist.

14. Verfahren nach Anspruch 13,
**dadurch gekennzeichnet,**
**dass** - sofern erfasst wurde, dass das Gehäuseelement (25, 25') geschlossen ist oder die Kassette (39) eingesetzt ist - mittels der Steuereinheit (21) anschließend erfasst wird, ob das Papierband in den Papierpfad eingelegt ist.

15. Verfahren nach einem der Ansprüche 12 bis 14,
**dadurch gekennzeichnet,**
**dass** mittels der Steuereinheit (21) erfasst wird, dass das Papierband nicht in den Papierpfad eingelegt ist, wenn die Empfangsintensität des Lichtempfängers der Reflexionslichtschranke (35, 35') kleiner ist als ein vorgegebener Reflexions-Schwellwert oder die Empfangsintensität des weiteren Lichtempfängers (37, 37') größer ist als ein vorgegebener Transmissions-Schwellwert, und dass andernfalls das Papierband in den Papierpfad eingelegt ist.

16. Verfahren nach Anspruch 15 und Anspruch 13 oder 14,
**dadurch gekennzeichnet,**
**dass** der vorgegebene Reflexions-Schwellwert kleiner ist als der vorgegebene Reflexions-Referenzwert und/oder dass der vorgegebene Transmissions-Schwellwert größer ist als der vorgegebene Transmissions-Referenzwert

17. Verfahren nach einem der Ansprüche 12 bis 16,
**dadurch gekennzeichnet,**
**dass** mittels der Steuereinheit (21) basierend auf wenigstens einer der beiden Empfangsintensitäten Papierbandtypen, die in ihrem Reflexionsvermögen und/oder Ihrer Lichtdurchlässigkeit, insbesondere in der Ortsabhängigkeit ihres Reflexionsvermögens und/oder Ihrer Lichtdurchlässigkeit in Bandrichtung, voneinander verschieden sind, voneinander unterschieden werden.

18. Verfahren nach einem der Ansprüche 12 bis 17,
**dadurch gekennzeichnet,**
**dass** mittels der Steuereinheit (21) bei in den Papierpfad eingelegtem und entlang des Papierpfads transportiertem Papierband basierend auf einem zeitlichen Verlauf der Empfangsintensität des weiteren Lichtempfängers (37, 37'), insbesondere über eine vorgegebene Zeitdauer, erfasst wird, ob es sich bei dem Papierband um ein Papierband eines ersten Typs, dessen Lichtdurchlässigkeit in Bandrichtung gemäß einem sich wiederholenden Muster variiert, insbesondere ein Etikettenband, oder um ein Papierband eines zweiten Typs, dessen Lichtdurchlässigkeit in Bandrichtung konstant ist, insbesondere ein Endlosband, handelt.

19. Verfahren nach Anspruch 18,
**dadurch gekennzeichnet,**
**dass** mittels der Steuereinheit (21) erfasst wird, dass es sich bei dem Papierband um ein Papierband des ersten Typs handelt, wenn der zeitliche Verlauf der Empfangsintensität des weiteren Lichtempfängers (37, 37') von einem ersten Wert auf einen zweiten Wert, der sich von dem ersten Wert um wenigstens eine vorgegebene Referenzdifferenz unterscheidet, wechselt, und dass andernfalls es sich bei dem Papierband um ein Papierband des zweiten Typs handelt.
